# EUROPÄISCHE PATENTSCHRIFT

(11) **EP 0 908 355 B1**
(45) Veröffentlichungstag und Bekanntmachung des Hinweises auf die Patenterteilung: **02.07.2003**
(21) Anmeldenummer: 98118806.3
(22) Anmeldetag: 05.10.1998
(51) Int. Cl.: B60R 16/02

(54) **Vorrichtung zum kontaktfreien Übertragen von Signalen zwischen Lenkrad und Lenksäule**
Device for contactless signal transmission between steering wheel and steering column
Dispositif pour la transmission de signaux sans contacts électriques entre volant et colonne de direction

(30) Priorität: 10.10.1997 DE 19744760
(43) Veröffentlichungstag der Anmeldung: 14.04.1999
(73) Patentinhaber: ROBERT BOSCH GMBH, 70442 Stuttgart (DE)
(72) Erfinder: Hambsch, Katja, 75015 Bretten (DE); Herrmann, Thomas, 82131 Gauting (DE)

(56) Entgegenhaltungen:
- DE-A- 4 218 645
- DE-A- 19 530 587
- DE-A- 19 530 588

## Beschreibung

### Stand der Technik

Die vorliegende Erfindung betrifft eine Vorrichtung zum kontaktfreien Übertragen von Signalen zwischen Lenkrad und Lenksäule, wobei auf der Lenkrad-Seite Airbag-Auslösemittel und eine deren Funktion überwachende Diagnoseeinrichtung vorhanden sind, welche ihr Diagnosesignal zu einem sich auf der Lenksäulen-Seite befindenden Steuergerät überträgt, das bei einem Fahrzeugcrash ein Auslösesignal für die Auslösemittel abgibt.

Eine derartige Vorrichtung ist aus der DE 195 39 070 A1 bekannt. Dabei sorgt ein Drehübertrager an der Trennstelle zwischen Lenkrad und Lenksäule für eine kontaktfreie Übertragung einerseits des auf der Lenkrad-Seite diagnostizierten Widerstandes der Auslösemittel (Airbagzündpille) zum Steuergerät auf der Lenksäulen-Seite und andererseits für die Übertragung eines vom Steuergerät abgegebenen Auslösesignals zu den lenkradseitigen Auslösemitteln. Dabei ist eine Diagnoseeinrichtung vorgesehen, welche den Widerstand der Auslösemittel mißt und bei Überschreiten eines vorgegebenen Widerstandswertes ein Fehlersignal an das Steuergerät aussendet, welches die Fehlfunktion dem Fahrer des Fahrzeugs signalisiert. Das Steuergerät erhält dabei keine Information über die Art des Fehlers.

Der Erfindung liegt nun die Aufgabe zugrunde, eine Vorrichtung der eingangs genannten Art anzugeben, mit der einem Steuergerät auf der Lenksäulen-Seite verschiedene, auf der Lenkrad-Seite diagnostizierte Fehlerzustände der Airbag-Auslösemittel mitgeteilt werden können.

### Vorteile der Erfindung

Gemäß den Merkmalen des Anspruchs 1 ist dem Steuergerät auf der Lenksäulen-Seite eine Simulationsschaltung vorgeschaltet. Mit dieser Simulationsschaltung kann der diagnostizierte Widerstand der Auslösemittel eingestellt werden. Der auf der Lenkrad-Seite diagnostizierte Widerstand der Auslösemittel wird also auf der Lenksäulen-Seite nachgebildet, so daß das Steuergerät aus diesem nachgebildeten Widerstand direkt ableiten kann, ob das Auslöesemittel in einem fehlerfreien Zustand ist oder nicht. Mit den von der Simulationsschaltung nachgebildeten Zuständen des Widerstandes der Auslösemittel kann nun das Steuergerät eine genaue Fehleranalyse durchführen und dementsprechend die Diagnose der Auslösemittel anpassen. Erfährt z.B. das Steuergerät über die Simulationsschaltung, daß beim Auslösemittel ein Kurzschluß nach Masse der Versorgungsspannung vorliegt, so veranlaßt das Steuergerät, daß bei einer weiteren Diagnose keine Schaltung auf den Pluspol der Versorgungsspannung erfolgt, weil es dann nämlich zu einer Zündung des Airbag käme.

Zweckmäßige Ausführungen der Erfindung gehen aus den Unteransprüchen hervor.

Danach überträgt ein erster lenkradseitiger Mikrocontroller den diagnostizierten Widerstand der Auslösemittel als Protokoll zu einem zweiten Mikrocontroller auf der Lenksäulen-Seite. Der zweite Mikrocontroller leitet aus dem Protokoll Steuersignale für die Einstellung des Widerstandes der Simulationsschaltung ab.

Die Simulationsschaltung enthält vorteilhafterweise einen Widerstand, der dem Widerstand der Auslösemittel im fehlerfreien Fall entspricht, und es sind parallel und in Reihe zu dem Widerstand Schalter angeordnet, mit denen durch entsprechende Kombinationen von Schalterstellungen entweder der fehlerfreie Widerstand oder ein hochohmiger oder niederohmiger Widerstand oder ein Kurzschluß zum positiven Pol oder ein Kurzschluß zum negativen Pol einer Versorgungsspannungsquelle realisierbar sind. Damit können von der Simulationsschaltung alle fehlerfreien bzw. fehlerbehafteten Zustände der Auslösemittel nachgebildet werden.

Es werden nicht nur die Diagnosesignale von der Lenkrad-Seite zur Lenksäulen-Seite übertragen, sondern auch in entgegengesetzte Richtung vom Steuergerät abgegebene Auslösesignale zu den Auslösemitteln auf der Lenkrad-Seite.

Ein zweckmäßiges Mittel für die Signalübertragung von der Lenkrad-Seite auf die Lenksäulen-Seite und umgekehrt ist ein Drehübertrager.

### Beschreibung eines Ausführungsbeispiels

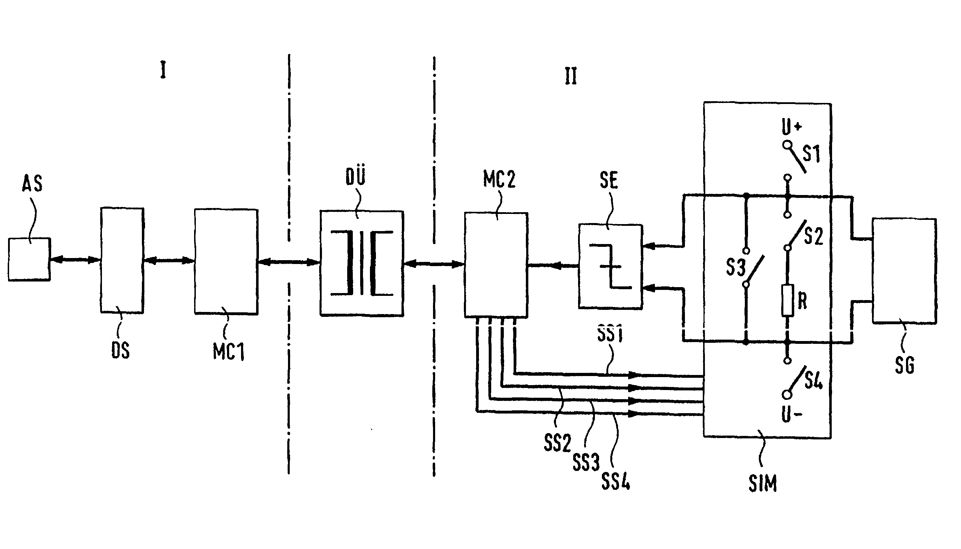

In der einzigen Figur ist ein Prinzipschaltbild einer Vorrichtung zum kontaktfreien Übertragen von Signalen zwischen Schaltungen auf der Lenkrad-Seite I und Schaltungen auf der Lenksäulen-Seite II eines Fahrzeugs dargestellt. Für die kontaktfreie Übertragung in beiden Richtungen zwischen Lenkrad-Seite I und Lenksäulen-Seite II sorgt z.B. ein Drehübertrager DÜ.

Auf der Lenkrad-Seite I befinden sich Auslösemittel AS für einen Airbag. Die Funktionsfähigkeit eines Airbag ist ständig zu überprüfen, damit er in jeder Notfallsituation sofort einsatzbereit ist. Das heißt, es muß erkennbar sein, ob die Auslösemittel (Zündpille) des Airbag sich in einem fehlerfreien Zustand befindet. Sind die Auslösemittel fehlerbehaftet, so muß dieses sofort dem Fahrer im Fahrzeug signalisiert werden. Ob die Auslösemittel gestört sind oder nicht, kann durch Messung ihres Widerstandes festgestellt werden. Im fehlerfreien Fall haben die Auslösemittel einen bestimmten Widerstand, der typischerweise im Bereich von 1,8 bis 2,5 Ohm liegt. Sind die Auslösemittel defekt, so ist deren Widerstand abweichend von dem vorgegebenen Wert entweder hochohmig oder niederohmig. Störungen können auch darin bestehen, daß die Auslösemittel einen Kurzschluß zum Pluspol oder zum Minuspol einer Versorgungsspannungsquelle aufweisen. Eine an die Auslösemittel AS angeschlossene Diagnoseeinrichtung DS mißt den Widerstand der Auslösemittel AS und leitet den diagnostizierten Widerstandswert an einen ersten Mikrocontroller MC1 auf der Lenkrad-Seite I weiter. Die Diagnoseeinrichtung DS wertet den gemessenen Widerstandwert aus, um festzustellen, ob die Auslösemittel sich in einem fehlerfreien Zustand befinden oder einen der genannten Fehlerzustände aufweisen. Das Diagnoseergebnis leitet der erste Mikrocontroller MC1 als Protokoll über den Drehübertrager DÜ zu einem zweiten Mikrocontroller MC2 auf der Lenksäulen-Seite II weiter.

Auf der Lensäulen-Seite II befindet sich ein Steuergerät SG, das im Falle eines Fahrzeugcrashes ein Auslösesignal für die Auslösemittel AS des Airbags abgibt. Diesem Steuergerät SG ist eine Simulationsschaltung SIM vorgeschaltet, die dazu dient, den aktuellen Widerstand der Auslösemittel AS nachzubilden. Die Simulationsschaltung SIM ist so aufgebaut, daß sie sowohl den korrekten Widerstand im fehlerfreien Fall der Auslösemittel als auch die in den einzelnen Fehlersituationen vorkommenden Widerstandswerte nachbilden kann. Die Simulationsschaltung enthält einen Widerstand R, der dem Widerstand der Auslösemittel im fehlerfreien Fall entspricht. Der Widerstand R liegt parallel an den Eingängen des Steuergerätes SG. In Reihe und parallel zu dem Widerstand R sind mehrere elektrisch steuerbare Schalter (z.B. Transistoren) S1, S2, S3, S4 angeordnet. In Reihe zum Widerstand R befindet sich ein Schalter S2 und parallel dazu ein Schalter S3. Außerdem ist ein Schalter S1 vorgesehen, der den Widerstand R mit dem positiven Pol U+ einer Versorgungsspannung verbinden kann, und es ist ein Schalter S4 vorhanden, der den Widerstand mit dem negativen Pol U- der Versorgungsspannung kurzschließen kann.

Die einzelnen Schalter S1, S2, S3 und S4 werden von Steuersignalen SS1, SS2, SS3 und SS4, die der zweite Mikrocontroller bereitstellt, angesteuert. Die Zustände der einzelnen Steuersignale SS1, SS2, SS3 und SS4 richten sich nach dem übertragenen Diagnoseprotokoll, das in Form einer wenig störanfälligen Bitfolge von der Lenkrad-Seite auf die Lenksäulen-Seite übertragen wird. Bereits oben wurden die möglichen Zustände der Auslösemittel entweder im fehlerfreien Fall oder in Störungsfällen dargelegt. Für jeden dieser Zustände müssen die Steuersignale SS1, SS2, SS3, SS4 folgende Stellungen der Schalter S1, S2, S3 und S4 realisieren:
1. Befinden sich die Auslösemittel in einem ungestörten Zustand, so ist der Schalter S2 zu schließen und alle anderen Schalter sind zu öffnen.
2. Besteht ein Kurzschluß der Auslösemittel nach dem Pluspol U+ der Versorgungsspannung, so sind die Schalter S1 und S2 zu schließen und die Schalter S3 und S4 zu öffnen.
3. Besteht ein Kurzschluß der Auslösemitte nach dem Minuspol U- der Versorgungsspannung, so sind die Schalter S2 und S4 zu schließen und die Schalter S1 und S3 zu öffnen.
4. Sind die Auslösemittel hochohmig gegenüber dem ungesteuerten Widerstand, so sind alle Schalter S1, S2, S3, S4 zu öffnen.
5. Sind die Auslösemittel niederohmig gegenüber dem ungestörten Widerstand, so sind die Schalter S2 und S3 zu schließen und alle anderen Schalter S1, S4 sind zu öffnen.

Bei einem Crash des Fahrzeugs, der ein Auslösen des Airbags erfordert, gibt das Steuergerät SG ein Auslösesignal ab, das über die Simulationsschaltung SIM zu einem Schwellwertentscheider SE gelangt. Übersteigt das Ausgangssignal des Steuergerätes SG eine im Schwellwertentscheider SE vorgegebene Schwelle, so wird dieses als Auslösesignal erkannt und dem zweiten Mikrocontroller MC2 zugeführt. Dieser überträgt das Auslösesignal über den Drehübertrager DÜ zum ersten Mikrocontroller MC1 auf der Lenkrad-Seite I. Der erste Mikrocontroller MC1 gibt dann das Auslösesignal an die Auslösemittel AS weiter, die darauf den Airbag zünden.

## Patentansprüche

1. Vorrichtung zum kontaktfreien Übertragen von Signalen zwischen Lenkrad und Lenksäule, wobei auf der Lenkrad-Seite (I) Airbag-Auslösemittel (AS) und eine deren Funktion überwachende Diagnoseeinrichtung (DS) vorhanden sind, welche ihr Diagnosesignal zu einem sich auf der Lenksäulen-Seite (II) befindenden Steuergerät (SG) überträgt, das bei einem Fahrzeugcrash ein Auslösesignale für die Auslösemittel (AS) abgibt, **dadurch gekennzeichnet, daß** auf der Lenksäulen-Seite (II) dem Steuergerät (SG) eine Simulationsschaltung (SIM) vorgeschaltet ist, die in Abhängigkeit vom Diagnosesignal auf den diagnostizierten Widerstand der Auslösemittel (AS) einstellbar ist.

2. Vorrichtung nach Anspruch 1, **dadurch gekennzeichnet, daß** ein erster lenkradseitiger Mikrocontroller (MC1) den diagnostizierten Widerstand der Auslösemittel (AS) als Protokoll zu einem zweiten Mikrocontroller (MC2) auf der Lenksäulen-Seite (II) überträgt, der aus dem Protokoll Steuersignale für die Einstellung des Widerstandes der Simulationsschaltung (SIM) ableitet.

3. Vorrichtung nach Anspruch 1, **dadurch gekennzeichnet, daß** die Simulationsschaltung (SIM) einen Widerstand (R) enthält, der dem Widerstand der Auslösemittel (AS) im fehlerfreien Fall entspricht, und daß parallel und in Reihe zu dem Widerstand (R) Schalter (S1, S2, S3, S4) angeordnet sind, mit denen durch entsprechende Kombinationen von Schalterstellungen der fehlerfreie Widerstand oder ein hochohmiger oder niederohmiger Widerstand oder ein Kurzschluß zum positiven Pol (U+) oder ein Kurzschluß zum negativen Pol (U-) einer Versorgungsspannungsquelle realisierbar sind.

4. Vorrichtung nach Anspruch 1, **dadurch gekennzeichnet, daß** das Steuergerät (SG) sein Auslösesignal von der Lenksäulen-Seite (II) aus zu den Auslösemitteln (AS) auf der Lenkrad-Seite (I) überträgt.

5. Vorrichtung nach einem der vorhergehenden Ansprüche, **dadurch gekennzeichnet**, das die Signalübertragung von der Lenkrad-Seite (I) auf die Lenksäulen-Seite (II) und umgekehrt über einen Drehübertrager (DÜ) erfolgt.

## Claims

1. Device for the contact-free transmission of signals between a steering wheel and steering column, airbag triggering means (AS) and a diagnostic device (DS) which monitors their operation being present at the steering wheel end (I), said diagnostic device (DS) transmitting its diagnostic signal to a controller (SG) which is located at the steering column end (II) and outputs a triggering signal for the triggering means (AS) if the vehicle crashes, **characterized in that** a simulation circuit (SIM), which can be set to the diagnosed resistance of the triggering means (AS) as a function of the diagnostic signal, is connected upstream of the controller (SG) at the steering column end (II).

2. Device according to Claim 1, **characterized in that** a first steering-wheel-end microcontroller (MC1) transmits the diagnosed resistance of the triggering means (AS) as a protocol to a second microcontroller (MC2) at the steering column end (II), which second microcontroller (MC2) derives control signals for setting the resistance of the simulation circuit (SIM) from the protocol.

3. Device according to Claim 1, **characterized in that** the simulation circuit (SIM) contains a resistor (R) which corresponds to the resistance of the triggering means (AS) in the fault-free state, and **in that** switches (S1, S2, S3, S4) are arranged in parallel and in series with the resistor (R) and can be used, through appropriate combinations of switch positions, to implement the fault-free resistor or a high-impedance or low-impedance resistor or a short-circuit with respect to the positive pole (U+) or a short-circuit with respect to the negative pole (U-) of a supply voltage source.

4. Device according to Claim 1, **characterized in that** the controller (SG) transmits its triggering signal from the steering column end (II) to the triggering means (AS) at the steering wheel end (I).

5. Device according to one of the preceding claims, **characterized in that** the signals are transmitted from the steering wheel end (I) to the steering column end (II), and vice versa, via a rotary coupling (DÜ).

## Revendications

1. Dispositif pour transmettre sans contact des signaux entre le volant et la colonne de direction, avec du côté du volant (I) des moyens de déclenchement de coussins gonflables (AS) et une installation de diagnostic (DS) qui surveille leur fonctionnement et qui transmet son signal de diagnostic à un appareil de commande (SG), lequel se trouve du côté de la colonne de direction (II) et émet en cas d'accident un signal de déclenchement pour le moyen de déclenchement (AS),
**caractérisé en ce que**
du côté de la colonne de direction (II) en amont de l'appareil de commande (SG) est monté un circuit de simulation (SIM) qui peut être réglé sur la résistance diagnostiquée du moyen de déclenchement (AS) en fonction du signal de diagnostic.

2. Dispositif selon la revendication 1,
**caractérisé en ce qu'**
un premier microcontrôleur (MC1) du côté du volant transmet en tant que protocole la résistance diagnostiquée du moyen de déclenchement (AS) à un deuxième microcontrôleur (MC2) du côté de la colonne de direction (II) lequel déduit à partir du protocole des signaux de commande pour régler la résistance du circuit de simulation (SIM).

3. Dispositif selon la revendication 1,
**caractérisé en ce que**
le circuit de simulation (SIM) contient une résistance (R) qui correspond à la résistance des moyens de déclenchement (AS) dans le cas sans erreur et que des commutateurs (S1, S2, S3, S4) sont disposés en parallèle et en série par rapport à la résistance (R), et dont une combinaison correspondante de positions de commutateur permet d'obtenir la résistance sans défaut ou une résistance à haute ou à basse impédance ou un court-circuit vers le pôle positif (U+) ou un court-circuit vers le pôle négatif (U-) d'une source d'alimentation en courant.

4. Dispositif selon la revendication 1,
**caractérisé en ce que**
l'appareil de commande (SG) transmet son signal de déclenchement depuis le côté de la colonne de direction (II) vers les moyens de déclenchement (AS) du côté du volant (I).

5. Dispositif selon l'une des revendications précédentes,
**caractérisé en ce que**
la transmission des signaux est réalisée depuis le côté du volant (I) vers le côté de la colonne de direction(II) et inversement par un translateur rotatif (DÜ).
